**Europäisches Patentamt**

**European Patent Office**

**Office européen des brevets**

(11) Veröffentlichungsnummer: **0 044 027**
**B1**

## EUROPÄISCHE PATENTSCHRIFT

(45) Veröffentlichungstag der Patentschrift: **03.04.85**

(51) Int. Cl.⁴: **C 08 F 8/12, C 08 F 116/06**

(21) Anmeldenummer: **81105284.4**

(22) Anmeldetag: **08.07.81**

(54) Verfahren zur Herstellung von Polyvinylalkohol und danach erhaltener Polyvinylalkohol.

(30) Priorität: **10.07.80 DE 3026144**

(43) Veröffentlichungstag der Anmeldung:
**20.01.82 Patentblatt 82/03**

(45) Bekanntmachung des Hinweises auf die
Patenterteilung:
**03.04.85 Patentblatt 85/14**

(84) Benannte Vertragsstaaten:
**DE FR GB IT**

(56) Entgegenhaltungen:
**DE-A-1 909 170**
**US-A-2 950 271**

(73) Patentinhaber: **HOECHST
AKTIENGESELLSCHAFT
Postfach 80 03 20
D-6230 Frankfurt am Main 80 (DE)**

(72) Erfinder: **TER Jung, Hermann
Taunusstrasse 76
D-6233 Kelkheim (Taunus) (DE)**
Erfinder: **Reihs, Leonhard, Dr.
Niederhöchstädter Pfad 18
D-6231 Schwalbach (DE)**
Erfinder: **Roh, Gerhard, Dr.
Gartenstrasse 27
D-6238 Hofheim am Taunus (DE)**

## Beschreibung

Die Erfindung bezieht sich auf ein Verfahren zur Herstellung von Polyvinylalkohol und den nach diesem Verfahren erhaltenen Polyvinylalkohol.

Polyvinylalkohol entsteht bekanntlich durch Solvolyse (Umesterung) von Polyvinylestern, insbesondere Polyvinylacetat. So is seit langem bekannt, daß aus Polyvinylestern durch Umsetzung mit einem absoluten Alkohol, z.B. Methanol, in Gegenwart eines sauren oder alkalischen Katalysators Polyvinylalkohol gewonnen wird (vgl. deutsche Patentschrift 763 840). Als Katalysator eignet sich dabei insbesondere ein Alkalialkoholat. Die Umsetzung wird in Vorrichtungen durchgeführt, die eine innige Durchmischung zäher Massen gestatten, z.B. in einem Kneter. Vorteilhaft ist die Anwendung niederer Temperaturen, z.B. 20 bis 25°C. Der Polyvinylalkohol fällt als weißes Produkt mit einem Reinheitsgrad von etwa 99% an.

Ferner ist bekannt, daß die Alkoholyse von Polyvinylacetat mit Hilfe von Methanol in Gegenwart eines alkalischen Katalysators, vorzugsweise Natriumhydroxid, eine nahezu vollständige Verseifung bewirkt und zu einem Polyvinylalkohol führt, der im wesentlichen frei von Acetatgruppen ist (vgl. US—Patentschrift 3 278 505). Der Katalysator wird dabei in einer Menge von 0,006 bis 0,15 Mol pro Mol Polyvinylacetat eingesetzt, und zwar in wäßriger oder methanolischer Lösung. Das Polyvinylacetat, das in pastöser Form als Ausgangsmaterial eingesetzt wird, wird zunächst so mit Methanol verdünnt, daß eine Lösung mit einer Konzentration von 10 bis 70 Gewichtsprozent resultiert, und diese Polyvinylacetat-Lösung wird dann bei einer Temperatur von 25 bis 60°C mit der Katalysator-Lösung vermischt. Niedrigkonzentrierte Polyvinylacetat-Lösungen mit einem Gehalt von etwa 15 bis 30 Gewichtsprozent werden dabei bevorzugt verwendet.

Aufgabe der Erfindung ist die Herstellung von Polyvinylalkohol durch katalytische Alkoholyse eines Polyvinylesters in Gegenwart einer möglichst geringen Lösungsmittel-Menge.

Die Erfindung betrifft ein Verfahren zur Herstellung von Polyvinylalkohol durch Alkoholyse eines Polyvinylesters in Gegenwart eines basischen Katalysators und in Gegenwart eines Alkanols also Lösungsmittel und ist dadurch gekennzeichnet, daß in einem mit Heiz- und Kühleinrichtungen ausgerüsteten Reaktor zunächst ein Polyvinylester mit einem Polymerisationsgrad von 400 bis 10 000 (bestimmt aus dem Gewichtsmittel des Molekulargewichts) in einem niederen Alkanol gelöst wird, wobei das Alkanol in einer Menge von 10 bis 50 Gewichtsprozent (bezogen auf Polyvinylester) eingesetzt wird, die erhaltene Lösung dann bei einer Temperatur von 30 bis 60°C homogen mit einer Lösung des Katalysators in einem niederen Alkanol vermischt wird, das Gemisch anschließend auf eine Temperatur von 70 bis 150°C erwärmt wird und der erhaltene Polyvinylalkohol Schließlich auf eine Temperatur von 20 bis 40°C abgekühlt, in üblicher Weise neutralisiert, gewaschen und getrocknet wird.

Als Ausgangsmaterial für das erfindungsgemäße Verfahren dient ein Polyvinylester, der in üblicher Weise durch Polymerisation eines Vinylesters einer niederen aliphatischen Carbonsäure wie Essigsäure, Propionsäure oder Buttersäure hergestellt worden ist. Besonders geeignet ist Polyvinylacetat. Der Polymerisationsgrad des Polyvinylesters (bestimmt) aus dem Gewichtsmittel des Molekulargewichts) liegt im Bereich von 400 bis 10 000, vorzugsweise von 500 bis 6000.

Die Alkoholyse des Polyvinylesters wird in Gegenwart eines niederen Alkanols durchgeführt, vorzugsweise eines Alkanols mit 1, 2 oder 3 Kohlenstoffatomen wie Methanol, Ethanol, Propanol und Isopropanol; Methanol ist dabei besonders geeignet. Das Alkanol wird in einer Menge von 10 bis 50 Gewichtsprozent, vorzugsweise 20 bis 40 Gewichtsprozent, verwendet (bezogen auf Polyvinylester).

Das erfindungsgemäße Alkoholyse-Verfahren wird in Gegenwart eines basischen Katalysators ausgeführt. Als Katalysator dient vorzugsweise ein Alkalihydroxid oder Alkalialkoholat. Geeignete Katalysatoren sind beispielsweise Natriumhydroxid, Kaliumhydroxid, Natriummethylat, -ethylat und —propylat sowie Kaliummethylat, -ethylat und -propylat sowie Kaliummethylat, -ethylat und -propylat. Der Katalysator Alkanol der vorgenannten Art als Lösungsmittel dient. Die Menge des Katalysators beträgt überlicherweise 1 bis 10 Gewichtsprozent, vorzugsweise 6 bis 9 Gewichtsprozent (bezogen auf Polyvinylester). Die Konzentration der Katalysatorlösung liegt zweckmäßigerweise im Bereich von 10 bis 25 Gewichtsprozent, vorzugsweise 12 bis 20 Gewichtsprozent.

Der Polyvinylester wird zunächst in dem niederen Alkanol gelöst und dann bei einer Temperatur von 30 bis 60°C, vorzugsweise 35 bis 50°C, homogen mit der Katalysatorlösung vermischt. Das so erhaltene Gemisch wird anschließend auf eine Temperatur von 70 bis 150°C, vorzugsweise 75 bis 100°C, erwärmt, wodurch die Umesterung in Gang gesetzt wird. Jenach Art und Menge des Polyvinylesters wird für die Umesterung eine Zeitspanne von 1 bis 5 Minuten benötigt.

Der nach der Umesterung erhaltene Polyvinylalkohol wird schließlich auf eine Temperatur von 20 bis 40°C, vorzugsweise 25 bis 35°C, abgekühlt und in üblicher Weise neutralisiert, gewaschen und getrocknet. Die Neutralisation erfolgt mit Hilfe einer schwachen anorganischen oder vorzugsweise organischen Säure, z.B. Phosphorsäure oder Essigsäure.

Nach der Neutralisation wird der Polyvinylalkohol mit einem niederen Alkanol der vorgenannten Art gewaschen. Die abschließende Trocknung wird bei einer Temperatur von 70 bis 175°C, vorzugsweise 90 bis 140°C durchgeführt. Die Trocknung unter Inertgas, z.B. Stickstoff, ist vorteilhaft.

Das Umesterungsverfahren der Erfindung wird in einem Reaktor durchgeführt, der mit Heiz- und Kühleinrichtungen ausgerüstet ist. Dadurch können in dem Reaktor nach Bedarf Heiz- und Kühlzonen eingestellt werden. Bevorzugt ist die Verwendung eines Reaktors, der eine Kontinuierliche Durchführung des Verfahrens gestattet und mit einer Einrichtung für eine kontinuierliche Durchmischung und Förderung des Reaktionsgutes versehen ist. Insbesondere eignet sich ein Extruder, der eine Schnecke oder auch zwei Schnecken aufweist.

Der erfindungsgemäß hergestellte Polyvinylalkohol fällt als weißes, körniges Produkt an, das durch eine gute Rieselfähigkeit ausgezeichnet ist. Der durchschnittliche Partikeldurchmesser des Polyvinylalkohols liegt im Bereich von 0,1 bis 1,5 mm, vorzugsweise 0,3 bis 0,8 mm. Seine Esterzahl beträgt im allgemeinen 1 bis 300 mg KOH/g, vorzugsweise 10 bis 150 mg KOH/g. Der Reinheitsgrad des Polyvinylalkohols beträgt mindestens 95%, vorzugsweise >98%. Der Polyvinylalkohol eignet sich als Basismaterial für die thermoplastische Herstellung von Formkörpern aller Art, z.B. Platten, Rohren, Profilen, Fasern und Folien. Die thermoplastische Verarbeitung erfolgt hauptsächlich durch Pressen, Spritzgießen und Extrudieren.

Die folgenden Beispiele dienen zur näheren Erläuterung der Erfindung.

### Beispiel 1

In einem Reaktionsextruder (Einschneckenextruder) werden stündlich 15 kg Polyvinylacetat, dessen Polymerisationsgrad 3900 beträgt, in 5 kg Methanol gelöst und bei einer Temperatur von 40°C mit einer Lösung von 0,9 kg Natriumethylat in 5 kg Methanol homogen vermischt, das Gemisch wird auf 80°C erwärmt, und das Produkt wird nach einer durchschnittlichen Verweilzeit von 3 min ausgetragen. Der erhaltene Polyvinylalkohol wird nach Abkühlung auf Raumtemperatur mit Essigsäure neutralisiert, mit Methanol gewaschen und schließlich bei einer Temperatur von 110°C getrocknet. Der Polyvinylalkohol ist ein weißes, körniges Produkt mit einem durchschnittlichen Partikeldurchmesser von 0,6 mm und einer Esterzahl von 18,1 mg KOH/g.

### Beispiel 2

Beispiel 1 wird wiederholt mit 0,6 kg Natriummethylat unter sonst gleichen Bedingungen. Der erhaltene Polyvinylalkohol ist ein weißes, körniges Produkt mit einem durchschnittlichen Partikeldurchmesser von 0,7 mm und einer Esterzahl von 24,6 mg KOH/g.

### Beispiel 3

In dem in Beispiel 1 verwendeten Reaktor werden stündlich 30 kg Polyvinylacetat, dessen Polymerisationsgrad 1200 beträgt, in 10 kg Methanol gelöst und bei einer Temperatur von 45°C mit einer Lösung von 1,2 kg Natriummethylat in 10 kg Methanol homogen vermischt, das Gemisch wird auf 85°C erwärmt, und das Produkt wird nach einer durchschnittlichen Verweilzeit von 90 s ausgetragen. Der erhaltene Polyvinylalkohol wird nach Abkühlung auf 25°C mit Essigsäure neutralisiert, mit Methanol gewaschen und bei einer Temperatur von 110°C getrocknet. Der Polyvinylalkohol ist ein weißes, körniges Produkt mit einem durchschnittlichen Partikeldurchmesser von 0,5 mm und einer Esterzahl von 53,2 mg KOH/g.

### Beispiel 4

Beispiel 1 wird wiederholt mit 0,3 kg Natriummethylat unter sonst gleichen Bedingungen. Der erhaltene Polyvinylalkohol ist ein weißes, körniges Produkt mit einem durchschnittlichen Partikeldurchmesser von 0,4 mm und einer Esterzahl von 105,0 mg KOH/g.

### Beispiel 5

Beispiel 3 wird wiederholt mit 0,6 kg Natriummethylat unter sonst gleichen Bedingungen. Der erhaltene Polyvinylalkohol ist ein weißes, körniges Produkt mit einem durchschnittlichen Partikeldurchmesser von 0,4 mm und einer Esterzahl von 148,7 mg KOH/g.

### Patentansprüche

1. Verfahren zur Herstellung von Polyvinylalkohol durch Alkoholyse eines Polyvinylesters in Gegenwart eines basischen Katalysators und in Gegenwart eines Alkanols als Lösemittel, dadurch gekennzeichnet, daß in einem mit Heiz- und Kühleinrichtungen ausgerüsteten Reaktor zunächst ein Polyvinylester mit einem Polymerisationsgrad von 400 bis 10 000 (bestimmt aus dem Gewichtsmittel des Molekulargewichts) in einem niederen Alkanol gelöst wird, wobei das Alkanol in einer Menge von 10 bis 50 Gewichtsprozent (bezogen auf Polyvinylester) eingesetzt wird, die erhaltene Lösung dann bei einer Temperatur von 30 bis 60°C homogen mit einer Lösung des Katalysators in einem niederen Alkanol vermischt wird, das Gemisch anschließend auf eine Temperatur von 70 bis 150°C erwärmt wird und der erhaltene Polyvinylalkohol schließlich auf eine Temperatur von 20 bis 40°C abgekühlt, in üblicher Weise neutralisiert, gewaschen und getrocknet wird.

2. Verfahren nach Anspruch 1, dadurch gekennzeichnet, daß als niederes Alkanol ein Alkanol mit 1 bis 3 Kohlenstoffatomen und als Katalysator ein Alkalihydroxid oder Alkalialkoholat eingesetzt wird.

3. Verfahren nach Anspruch 1, dadurch gekennzeichnet, daß als Polyvinylester Polyvinylacetat eingesetzt wird.

4. Verfahren nach Anspruch 1, dadurch gekennzeichnet, daß die Neutralisation mit Essigsäure durchgeführt wird.

5. Verfahren nach Anspruch 1, dadurch gekennzeichnet, daß als Reaktor ein Schneckenextruder verwendet wird.

6. Polyvinylalkohol, erhalten nach dem Verfahren gemäß Anspruch 1.

7. Polyvinylalkohol nach Anspruch 6, dadurch gekennzeichnet, daß er eine Esterzahl von 1 bis 300 mg KOH/g aufweist.

## Revendications

1. Procédé de fabrication de poly(alcool vinylique) par alcoolyse d'un poly(ester vinylique) en présence d'un catalyseur basique et en présence d'un alcanol comme solvant, caractérisé en ce qu'un poly(ester vinylique) d'un degré de polymérisation de 400 à 10.000 (déterminé à partir de la moyenne pondérale de la masse moléculaire) est tout d'abord dissous dans un alcanol inférieur dans un réacteur équipé de dispositifs de chauffage et de refroidissement, l'alcanol étant mis en oeuvre à raison de 10 à 50 pourcent en poids (par rapport au poly(ester vinylique), puis la solution résultante est mélangée de façon homogène, à une température de 30 à 60°C, avec une solution du catalyseur dans un alcanol inférieur, le mélange est ensuite chauffé à une température de 70 à 150°C et enfin le poly(alcool vinylique) obtenu est refroidi à une température de 20 à 40°C, neutralisé de manière usuelle, lavé et séché.

2. Procédé selon la revendication 1, caractérisé en ce qu'on met en oeuvre, comme alcanol inférieur, un alcanol ayant de 1 à 3 atomes de carbone et, comme catalyseur, un hydroxyde de métal alcalin ou un alcoolate de métal alcalin.

3. Procédé selon la revendication 1, caractérisé en ce que du poly(acétate de vinyle) est mis en oeuvre en tant que poly(ester vinylique).

4. Procédé selon la revendication 1, caractérisé en ce que la neutralisation est effectuée avec de l'acide acétique.

5. Procédé selon la revendication 1, caractérisé en ce qu'une extrudeuse à vis est utilisée comme réacteur.

6. Poly(alcool vinylique) obtenu selon le procédé conforme à la revendication 1.

7. Poly(alcool vinylique) selon la revendication 6, caractérisé en ce qu'il possède un indice d'ester de 1 à 300 mg de KOH/g.

## Claims

1. A process for the manufacture of polyvinyl alcohol by the alcoholysis of a polyvinyl ester in the presence of a basic catalyst and in the presence of an alkanol as solvent, which comprises first dissolving, in a reactor equipped with means for heating and cooling, a polyvinyl ester having a degree of polymerization of 400 to 10,000 (determined from the weight average of the molecular weight) in a lower alkanol, the alkanol being employed in an amount of 10 to 50 per cent by weight (relative to the polyvinyl ester), then mixing the resulting solution at a temperature of 30 to 60°C with a solution of the catalyst in a lower alkanol, so as to form a homogeneous mixture, then warming the mixture to a temperature of 70 to 150°C and, finally, cooling the resulting polyvinyl alcohol to a temperature of 20 to 40°C and neutralising, washing and drying it in a customary manner.

2. A process as claimed in claim 1, wherein the lower alkanol employed is an alkanol having 1 to 3 carbon atoms and the catalyst employed is an alkali metal hydroxide or an alkali metal alcoholate.

3. A process as claimed in claim 1, wherein the polyvinyl ester employed is polyvinyl acetate.

4. A process as claimed in claim 1, wherein the neutralization is effected with acetic acid.

5. A process as claimed in claim 1, wherein the reactor used is a screw extruder.

6. A polyvinyl alcohol, obtained by the process according to claim 1.

7. A polyvinyl alcohol as claimed in claim 6, which has an ester number of 1 to 300 mg of KOH/g.